# EUROPEAN PATENT APPLICATION

(11) **EP 4 147 954 A1**
(43) Date of publication of application: **15.03.2023**
(21) Application number: 21196072.9
(22) Date of filing: 10.09.2021
(51) Int. Cl.: B62H 5/00, B62J 43/28, B60L 50/20, B60L 50/60

(54) **BATTERY LOCK**

(71) Applicant: TIER Mobility SE, 10785 Berlin (DE)
(72) Inventor: Zarów, Jan, 30-694 Krakow (PL); Zajac, Mariusz, 30-350 Krakow (PL)
(74) Representative: Zimmermann & Partner Patentanwälte mbB

(57) **Abstract**

A battery lock (100) for a battery (20) of an electrical vehicle (1000), comprising:
- a rotatable hook-latch (1) comprising a recess (11) and having a blocking surface (12);
- a trigger member (4) having a trigger tooth (44);
- a cam (5);
- a battery lock motor (2) configured to move the cam (5);
- a trigger pull spring (46) configured to press the trigger member (4) towards the hook-latch (1);
- a sensor unit (8); and
- a control unit which is configured to control the battery lock motor (2);

wherein the battery lock (100) is adapted to a sequence of a ready-to-lock configuration, followed by a locked configuration; and an unlocked configuration;
wherein in the ready-to-lock configuration the trigger pull spring (46) moves the trigger member (4) towards the hook-latch (1) and a movement of the trigger member (4) is not blocked by the cam (5);
wherein in the locked configuration a catch (22) of the battery (20) is engaged with the recess (11) of the hook-latch (1), the trigger tooth (44) of the trigger member (4) is in contact with the blocking surface (12) of the hook-latch (1) thereby blocking a rotation of the hook-latch (1);
wherein in the unlocked configuration the trigger tooth (44) of the trigger member (4) is not in contact with the blocking surface (12) of the hook-latch (1) due to the cam (5), and a movement of the trigger member (4) is blocked by the cam (5); and
wherein the sensor unit (8) is adapted to provide a sensor signal pattern to a control unit, which is indicative with respect to a current configuration of the battery lock (100).

## Description

### FIELD AND BACKGROUND

The present invention relates to a lock for a battery of a personal vehicle like, e.g., a motorized bicycle, E bike, E scooter, E roller or a go-kart, particularly to a battery lock for a battery-driven electric vehicle, e.g. an E-scooter.

Different locks and locking mechanisms are known for preventing unauthorized extraction of the battery of such vehicles. However, often they can easily be picked and therefore, do not really prevent theft or unauthorized removal or replacement of the battery.

Even though the lock is specifically configured for use of a battery with a vehicle, it can also be applied to a battery charging station. Instead of a vehicle's frame a charging station can be equipped with multiple identical battery locks. The battery lock as described can equally be used with other items intended for shared use within a community of authorized users. Examples of such items include playground equipment in a playground, watering cans in a cemetery, or construction equipment provided in a gated community, for example. In such cases, the frame in which the lock is embedded can be provided, for example, as a roofed scaffold offering said items for rent, whereas said items can easily be equipped with a fitting catch.

### BRIEF SUMMARY

In view of the above, a locking mechanism for the battery of motorized or electrical vehicles is suggested, which is integrated with the frame of the vehicle and inaccessible for unauthorized manipulation. Accordingly, a battery lock according to claim 1 is suggested. Further, a method for securing a battery, an electric vehicle comprising the battery lock, a method for changing a battery, and using a battery lock are suggested.

The invention is defined by the appended claims. Particularly, according to an embodiment, a battery lock for a battery of an electrical vehicle is suggested, wherein the battery lock comprises:
- a rotatable hook-latch comprising a recess and having a blocking surface;
- a trigger member having a trigger tooth;
- a cam;
- a battery lock motor configured to move the cam;
- a trigger pull spring configured to press the trigger member towards the hook-latch;
- a sensor unit; and
- a control unit which is configured to control the battery lock motor;
   wherein the battery lock is adapted to a sequence of a ready-to-lock configuration, followed by a locked configuration; and an unlocked configuration;
   wherein in the ready-to-lock configuration the trigger pull spring moves the trigger member towards the hook-latch and a movement of the trigger member is not blocked by the cam; wherein in the locked configuration a catch of the battery is engaged with the recess of the hook-latch, and the trigger tooth of the trigger member is in contact with the blocking surface of the hook-latch thereby blocking a rotation of the hook-latch;
   wherein in the unlocked configuration the trigger tooth of the trigger member is not in contact with the blocking surface of the hook-latch due to the cam, and a movement of the trigger member is blocked by the cam; and
   wherein the sensor unit is adapted to provide a sensor signal pattern to a control unit, which is indicative with respect to a current configuration of the battery lock.

Therein, the sensor unit can optionally be connected with a separate control unit on board of the vehicle and send information only about a current state of the battery lock via a cable connection to the separate control unit (e.g. a vehicle control unit).

According to an embodiment an electrical vehicle energized by a battery, having a frame, and said battery lock is suggested, wherein the battery lock is adapted to be fixed inside a housing, e.g. a trough of the chassis or of the frame, wherein the housing is integrated in the frame/chassis.

According to an embodiment a method for securing a battery with a battery lock according to any of the embodiments related to the battery lock is suggested. The battery comprises a battery body and has electrical contacts, accessible for an electrical connection with a battery-energized electrical vehicle. Further, the battery, particularly the battery housing has a catch. Typically, such catch can be provided within a lock release slot or groove of the battery housing. The suggested method comprises:
- providing a vehicle comprising the battery lock integrated in a frame of the vehicle, wherein the battery lock is in a ready-to-lock state;
- inserting one end of the battery into a holster integrated in the frame such as to provide an electrical connection between the contacts of the battery with corresponding contacts of the holster;
- pressing the body of the battery against a pressure generated by a buffer spring until the hook-latch of the battery lock receives the catch, i.e. will engage with the catch of the battery and the latch slides into a locked configuration, the locked configuration being reached by a contact of a blocking surface of the hook-latch with a trigger tooth of the trigger member and a maximal areal contact of a second end of the trigger member with the cam.

Further, according to an embodiment a method for unlocking a battery of an electric vehicle is suggested, the method comprising:
- providing a vehicle comprising a wireless interface, the battery lock as described herein, and a battery;
- receiving, by the wireless interface of the vehicle, an unlocking signal; and
- applying, by the control unit, a driving current to the battery lock motor and transitioning the battery lock into the unlocked configuration.

Therein, when the separate control unit is remote/away from the sensor unit of the battery lock, there will be merely a signal generated by the sensor unit which, being transferred to the separate vehicle control unit, may initiate providing of a corresponding driving current to the motor of the battery lock. Typically, a signal from the sensor unit indicates only the state of the lock. A logic in a firmware in the vehicle control unit may initiate a driving current for the motor of the battery lock depending on a state of the battery lock.

Advantageously, the above embodiments allow to reliably prevent burglary of batteries from electric vehicles and the use of the vehicle by authorized people only.

### BRIEF DESCRIPTION OF THE DRAWINGS

A full and enabling disclosure of the present invention, including the best mode thereof, to one of ordinary skill in the art, is set forth more particularly in the remainder of the description, including reference to the accompanying figures.
Figure 1 shows the battery lock (A), a side view of the hook-latch (B), and an expanded view of the battery lock (C), according to an embodiment.
Figure 2 shows three basic states or configurations of the battery lock: "ready-to-lock" (A); "locked" (B); and "unlocked" (C) according to a typical embodiment.
Figure 3 shows basic states "unlocked" (A) and "locked" (B) according to an embodiment.
Figure 4 shows positions of sensors on the sensor unit according to an embodiment and the ready-to-latch configuration of the battery lock.
Figure 5 illustrates the interaction of the cam with the arc-shaped trigger member in the unlocked state (A, B) according to an embodiment.
Figure 6 illustrates the interaction of the cam with the arc-shaped trigger member in the locked state (A, B, C, D) according to another embodiment.
Figure 7 illustrates an embodiment of mounting of the battery lock under a battery trough within the down tube of an e-bike.
Figure 8 illustrates different frame designs A and B with tubes which are suitable for integration of the battery lock.

In the following detailed description, reference is made to the accompanying figures, which form a part hereof, and in which are shown by way of illustration specific embodiments and features of the invention. It is to be understood that other embodiments may be utilized and structural or logical changes may be made without departing from the scope of the present invention. The following detailed description, therefore, is not to be taken in a limiting sense, and the scope of the present invention is defined by the appended claims.

### DETAILED DESCRIPTION

The use of the word "a" or "an" when used in conjunction with the term "comprising" in the claims and/or the specification may mean "one," but it is also consistent with the meaning of "one or more," "at least one," and "one or more than one."

The use of the term "or" in the claims is used to mean "and/or" unless explicitly indicated to refer to alternatives only or the alternatives are mutually exclusive, although the disclosure supports a definition that refers to only alternatives and "and/or."

As used in this specification (above and below) and claims, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The technical object of the described embodiments is to provide a battery lock which can be integrated within a tube of the vehicle's frame in order to protect the lock against adverse weather conditions and from unauthorized manipulation, e.g. picking.

Although, at a first glance, it might appear that the proposed battery lock is suitable merely for a certain type of batteries having a catch, the skilled person using the description and claims will be able to adapt the lock's construction, especially the shape and dimensions of the hook-latch, to any type of battery. On the other hand, even the housing of any commercially available battery might easily be adapted to the disclosed battery lock by a suitable catch having a tongue of suitable thickness and width to fir snuggly with the hook-latch of the described battery lock.

According to an embodiment, a battery lock for a battery of an electrical vehicle is suggested. Said battery lock comprises:
- a rotatable hook-latch comprising a recess and having a blocking surface ;
- a trigger member having a trigger tooth;
- a cam;
- a battery lock motor configured to move the cam;
- a trigger pull spring configured to move the trigger member towards the hook-latch;
- a sensor unit; and
- a control unit, configured to control the battery lock motor;
wherein the battery lock is adapted to a sequence of the following configurations:
a ready-to-lock configuration, followed by a locked configuration; and an unlocked configuration;
wherein in the ready-to-lock configuration the trigger pull spring moves the trigger member towards the hook-latch and a movement of the trigger member is not blocked by the cam;
wherein in the locked configuration a catch of the battery is engaged with the recess of the hook-latch, the trigger tooth of the trigger member is in contact with the blocking surface of the hook-latch thereby blocking a rotation of the hook-latch;
wherein in the unlocked configuration the trigger tooth of the trigger member is not in contact with the blocking surface of the hook-latch due to the cam, and a movement of the trigger member is blocked by the cam; and
wherein the sensor unit is adapted to provide a sensor signal pattern to the control unit, which is indicative with respect to a current configuration of the battery lock.

Advantageously, the suggested battery lock is compact and rugged. It can easily be integrated with the frame or chassis of the vehicle, e.g. be inserted in a tube, e.g. a down tube, of the frame or chassis.

The electrical vehicle can comprise a frame and a wireless interface. The wireless interface may be configured to receive an unlocking signal upon which the control unit applies a driving current to the battery lock motor. The control unit may be a vehicle control unit.

According to an embodiment the battery lock further comprises a buffer configured to carry an effective weight of the battery and having a pushed-out and a pushed-in state; wherein in the ready-to-lock configuration the buffer is in the pushed-out state; wherein in the locked configuration the buffer is in the pushed-in state; and wherein in the unlocked configuration the buffer is in the pushed-out state.

Advantageously that allows for easy and swift change between the locked and ready-to-lock configurations. Furthermore, a current state of the lock, i.e. the battery being ready for swap or to be locked is easily recognizable.

According to an embodiment the motor comprises a drive shaft and a stopper element on the drive shaft is configured to restrict a rotation of the drive shaft relative to a stopper abutment fixed to a housing of the battery lock.

Advantageously, the stopper element restricts the rotation of the drive shaft and thus, of the cam to two basic positions. These two basic positions correspond to a relative rotation by 0° and a relative rotation by 180°. Furthermore, this allows to lock the motor in case of an interruption in power supply and the state of the cam is unknown.

According to an embodiment the battery lock is configured to be integrated in the frame of an electrical vehicle.

As the tubes of the frame of, e.g., a bicycle or a scooter are oriented in a plane which is defined by a main movement direction of the vehicle, the indicated orientation of the movement of the hook-latch allows the battery to be fastened in the plane of the frame. Such is the most convenient orientation of the battery for the person which uses the vehicle, as the frame will be slim. Using the suggested battery lock allows the battery to be mounted in every direction corresponding to a chosen design.

Advantageously, the described shape of the cam allows easy conversion of a first rotational movement around the axis of the motor into a second rotational movement of the latch having a pivot axis which is oriented orthogonally thereto.

According to an embodiment the buffer comprises a buffer magnet, and the buffer magnet is arranged to allow detection of a state of the buffer by a first sensor, e.g. a Hall effect sensor, of the sensor unit.

Advantageously, a configuration of the battery lock is easily and reliably detectable.

According to an embodiment the cam rotatable and the motor is configured to rotate the cam, wherein the cam is configured to transform a rotary motion into a linear motion.

Advantageously, a change of configurations of the battery lock can easily be initiated, for example, by the control unit applying a driving current to the battery lock motor.

According to an embodiment in the ready-to-lock configuration the trigger pull spring presses the trigger tooth towards a sliding surface of the hook-latch, wherein the sliding surface is configured to guide the trigger tooth to the blocking surface of the hook-latch upon a rotation of the hook-latch.

As evident, the use of the trigger as a lever allows to decrease the force on the cam if-advantageously, a distance between the trigger tooth and rotation axis is smaller than between rotation axis and cam contact surface to allow an efficient work of the lock and geometry allows to slide the trigger out with no cam motion.

According to an embodiment the trigger member is arc-shaped and rotatable at a first end portion, wherein a second end portion of the trigger member is configured for a physical contact with the cam in the unlocked configuration, in the locked configuration, and during a transfer from the locked configuration to the unlocked configuration of the battery lock.

Advantageously, the arc-shape allows to allocate the trigger tooth close to an outer contour of the hook-latch, comprising a sliding and a blocking surface. Further, a compact structure of the whole lock is achieved.

According to an embodiment the trigger member with the trigger tooth is pivotable relative to a rotational axis of the hook-latch by a movement of the cam, i.e. by a rotation of the drive shaft of the battery motor.

Advantageously, the position of the trigger tooth with respect to the different contact surfaces of the hook-latch determines the state of the lock and simplifies its design, thus allowing for compact construction.

According to an embodiment in the ready-to-lock configuration a contact of the trigger tooth with the sliding surface of the hook-latch prevents a contact of the second end portion of the trigger member with the cam.

Optionally, the trigger tooth may be, e.g., a pin which is arranged near to the rotatable first end of the trigger member and oriented substantially parallel to rotational (pivot) axis of the trigger member. The trigger tooth may also comprise a triangular cylinder (prism), the central axis thereof being substantially parallel to the rotational (pivot) axis of the trigger member. Thus, the trigger tooth surface (its cross-section) may be round, arranged centrally to the rotational axis of the trigger member which allows a smooth work of the lock. Advantageously, the force needed to open the lock can be decreased.

The battery lock may comprise a latch torsion spring. Advantageously, the battery lock works smoothly without the need of additional electrical energy, as the trigger tooth while sliding along the sliding surface of the hook-latch (i.e. the sliding surface sliding essentially beneath the trigger tooth by a rotation of the hook-latch) reaches an edge, where the sliding surface and the blocking surface meet. At that point both the trigger tooth jumps towards the rotational axis of the hook-latch and the second end portion of the trigger member jumps towards a contact with the cam, both under the pressure of the latch torsion spring. Thus, any further movement of the hook-latch is blocked and the battery is locked.

According to an embodiment the vehicle control unit is configured to apply a first driving current having a (first) polarity to the battery lock motor and a second driving current having a (second) polarity which is opposite to the (first) polarity of the first driving current to the battery lock motor ( a DC motor), depending from a sensor signal pattern of the sensor unit. Instead of a DC motor, also a stepper motor can be applied which is not controlled by the polarity.

Advantageously, by simply switching the polarity, the cam having initiated an unlocking state can swiftly return into its initial state (at 0° rotation of the drive shaft) to allow for easy use of the battery lock and to return to ready to latch position.

According to an embodiment the sensor unit comprises a printed circuit board (PCB) and at least two sensors for generating the sensor signal pattern and/or for detecting a position of at least two elements selected from: the hook-latch, the buffer, and the trigger member.

Advantageously, the sensor pattern can easily be transmitted by the wireless interface to a remote server in order to monitor a current configuration of the battery lock. Typically, a sensor pattern is transferred into digital signal in the vehicle control unit (VCU) and can, optionally, be sent - via a wireless interface - to a remote server as a current lock state. Instead of using a vehicle control unit on the PCB, inside the lock can be a simple controller with a motor driver to generate all needed signals for the wireless interface and for motor driving current.

According to an embodiment a front face of the drive shaft comprises a socket, a tab, or a boss, e.g. a slot, which is accessible through the frame for manually rotating the cam.

Advantageously, the configuration of the lock can be manually changed in the event of insufficient driving current for the motor with a suitable tool, i.e. corresponding to the socket, tab, or boss. The direct current used for the motor is provided by another battery, not by the battery used for driving the vehicle. Typically, each magnet sensor (e.g. Hall effect sensors) is responsible merely for one end position of a corresponding magnet.

According to an embodiment the trigger member comprises a magnet, wherein a position of the magnet is indicative for a distance between the second end portion of the trigger member and the cam, and wherein a sensor of the sensor unit is configured to sense the position of the magnet. Typically, the sensor is configured to sense a motion of the trigger member and thus, to detect a change of a configuration of the battery lock.

Advantageously, the current configuration of the battery can be detected remotely.

According to an embodiment in case the trigger member doesn't comprise the magnet, the hook-latch comprises a magnet, wherein a position of that magnet is indicative for a rotation position of the hook-latch and wherein a sensor of the sensor unit is configured to measure the position of said magnet.

As illustrated by the Figures the magnet may also be fixed to the trigger member and the position of the trigger member is used to indicate a current state of the lock. Said magnet in the trigger member provides an even more reliable detection of a state of the lock. Advantageously, the current configuration of the battery lock can remotely be detected.

According to an embodiment both, the buffer and the trigger may have magnets and corresponding sensors may be carried by the sensor unit PCB. With these two sensors plus battery electrical connections in the holster it can reliably detected, whether the battery is on place. A sensor for the cam is only for the motor's long, durable life. Of course, there is a possibility to change a magnet's position from the trigger to the latch but in such case, a faulty signal might be detected because of a wide sensor range while the trigger is not fully blocked but the sensor already detects the magnet allocated in the latch. Thus, the sensor might need to be additionally shielded. Such would cause additional costs.

According to an embodiment an electrical vehicle energized by a battery, having a frame, and the battery lock according to any of the preceding embodiments is suggested, wherein the battery lock is adapted to be fixed inside a housing, wherein the housing is integrated in the frame.

Advantageously, such vehicle can be securely shared among different authorized users. In particular, the electrical vehicle can comprise a wireless interface which can receive an unlocking signal generated by a user via, for example, a remote server.

According to an embodiment the frame of the suggested vehicle comprises a cavity or recess, e.g. trough, wherein the main part of the housing of the battery lock is placed in or beneath said cavity (recess, trough) while the hook-latch reaches into the cavity (recess, trough) via an opening at the bottom of the cavity.

Advantageously, the cavity in the frame protects both the battery and the lock against any type of adverse external conditions (e.g. sand, dust, mud) or mechanical damage.

According to an embodiment the frame comprises a holster defining a first fixing point for the battery, wherein the battery lock defines a second fixing point for the battery in said cavity.

Advantageously, the battery which typically has a longitudinal shape, can reliably be secured by two fixing points at or near corresponding end portions of the battery.

According to an embodiment a method for securing a battery with a battery lock according to any corresponding embodiments above claims is suggested, wherein the method comprises the following steps:
- providing a vehicle comprising the battery lock as described herein and integrated in a frame of the vehicle, wherein the battery lock is in a ready-to-lock state;
- inserting one end of the battery into a holster integrated in the frame such as to provide an electrical connection between the contacts of the battery with corresponding contacts of the holster;
- pressing the body of the battery against a pressure generated by a buffer spring until the hook-latch of the battery lock receives the catch of the battery and the latch slides into a locked configuration, the locked configuration being reached by a contact of a blocking surface of the hook-latch with a trigger tooth of the trigger member and a maximal areal contact of the second end of the trigger member with the cam.

Advantageously, the suggested method is easy to perform by simply pushing the battery into its place, even by a low skill user, for example, someone using the vehicle for the first time.

According to an embodiment a method for unlocking a battery of an electric vehicle is suggested, the method comprising:
- providing a vehicle comprising a wireless interface, the battery lock according to any of the embodiments described above, and a corresponding battery;
- receiving, by the wireless interface of the vehicle, an unlocking signal; and
- applying, by the control unit, a driving current to the battery lock motor and transitioning the battery lock into the unlocked configuration.

Advantageously, said unlocking method can easily be initiated by a mobile device of an authorized user generating the unlocking signal, e.g. after a registration of the user and detecting the necessity of a battery exchange and optionally communicating with a remote server.

According to an embodiment the vehicle is provided with a frame having a cavity, wherein the battery is at least partially placed inside the cavity, wherein the method further comprises:
- pushing, by a buffer (7) and a buffer spring (75) of the battery lock (100), the battery (20) at least partially out of the cavity (650) after applying a driving current to the battery lock motor (2).

Advantageously, the unauthorized withdrawal of a battery from an unattended vehicle by unauthorized people is reliably prevented by the lock, whereas an exhausted battery can easily be taken out by the user, and be replaced with a fully charged battery.

According to further embodiments the described above buffer comprises a coil compression spring, a volute spring, and/or a gas spring.

Advantageously these springs can be made quite strong and can be able to carry the weight of the battery and thus push the battery out of the trough to communicate that battery is ready for exchange by the user.

According to further embodiments a depth *d* and a width *w* of the recess (or mouth) of the hook-latch substantially correspond to a length / and a maximal thickness *t* of a corresponding tongue comprising the catch of the battery.

Advantageously, the resulting perfect fit of the latch with the catch allows reliable securing of the battery and helps, together with the buffer, to prevent rattling during a ride.

According to further embodiments the trigger member is pivotable in the main plane and configured to serve as an intermediate member to trigger by the mentioned 180° rotation of the drive shaft a snapping of the hook-latch with the cam.

Advantageously, an easy transition from different states into another of the indicated sequence is provided. The buffer helps with battery ejection so the latch spring can be softer - and lower force for moving the trigger and cam is required.

According to further embodiments the drive shaft is oriented in or parallel to the main plane defined by the frame but can also be perpendicular to the main plane depending on the shape of the cam.

Advantageously, that allows to obtain a small, i.e. compact, but strong lock. Furthermore, such lock shape is adapted to fit all types of vehicles.

Each embodiment described above may be combined with any other embodiment or embodiments unless clearly indicated to the contrary.

A full and enabling disclosure of the present invention, including the best mode thereof, to one of ordinary skill in the art, is set forth more particularly in the remainder of the description, including reference to the accompanying figures.

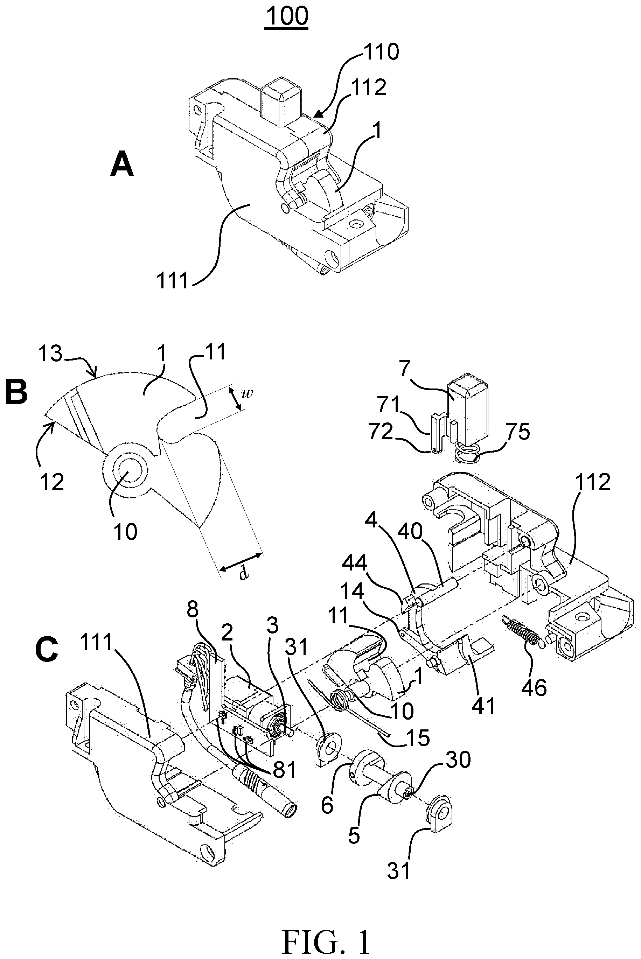

As to the mentioned figures, Fig. 1A illustrates the compact design of the proposed battery lock 100. The (inversed) T-shape of the housing 110 allows its secure integration within a tube section having only a small opening for its upper part, comprising the latch and the buffer. The housing 110 consists of two half-shells 111, 112. There is an opening for the electrical connection of the motor 2 and sensor unit /PCB 8, e.g. for corresponding cables. Opposite to it, there may be provided an opening in the housing for external access to the drive shaft 3 of the motor (not shown), as will be explained further below.

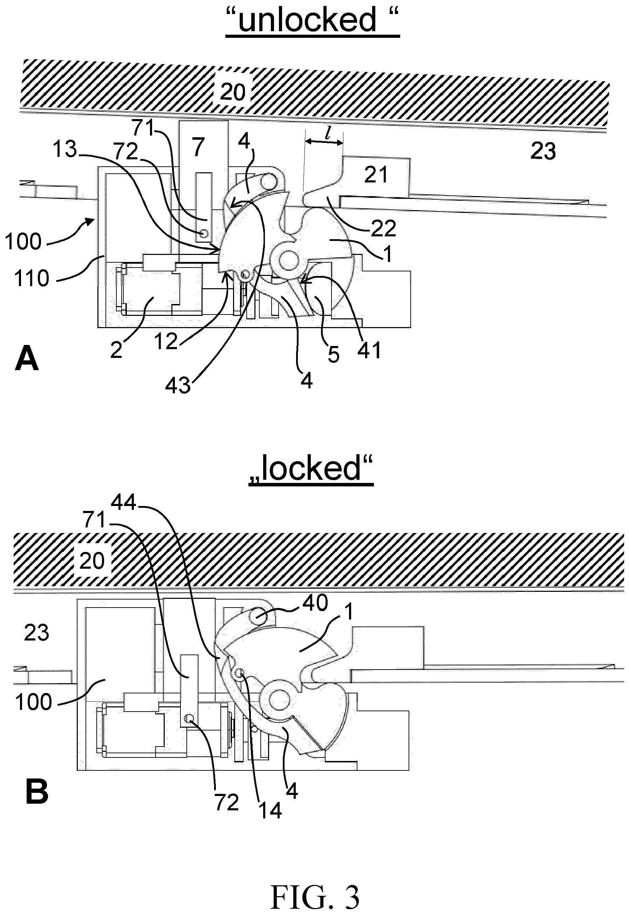

Fig. 1B illustrates the hook-shaped cam 1 which has a mouth 11 of width *w* and depth *d.* The dimensions of *w* and *d are* adapted to the catch 21 of the battery 20, especially to a tongue 22 thereof. The catch 1 comprises a pivot axis 10, a radial surface 12 and a circumferential surface 13. These surfaces are contact surfaces for an interaction with corresponding surfaces on a tooth 44 of the arc shaped trigger member 4 (See Fig. 3) which stabilize corresponding positions, i.e. states, of the latch 1.

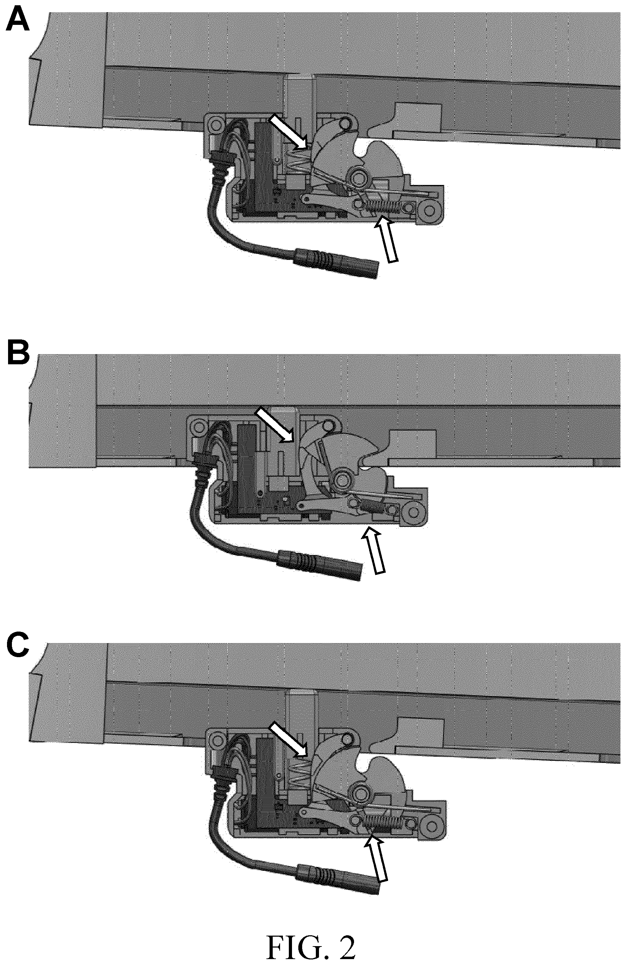

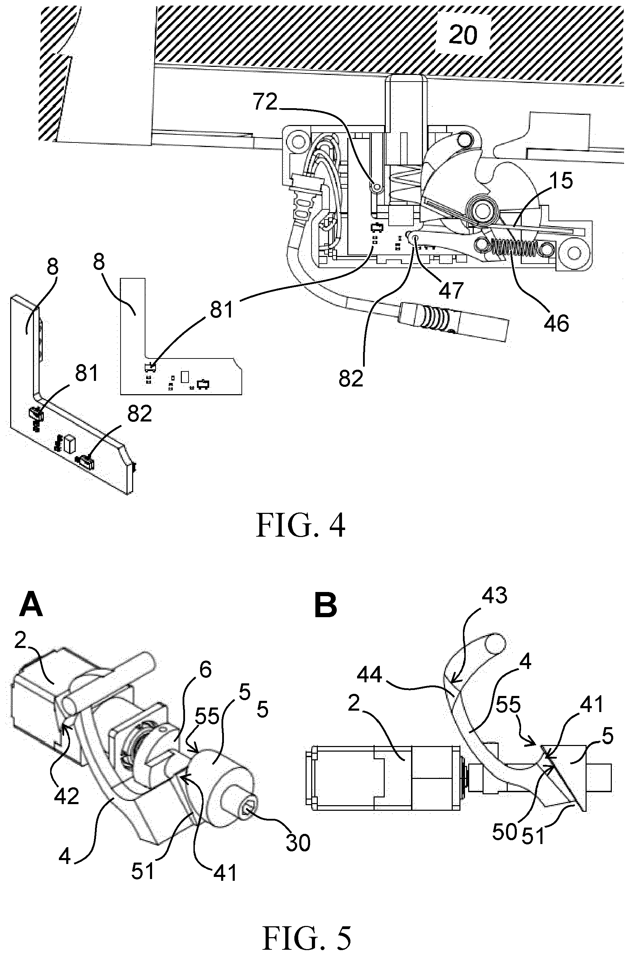

As shown in Fig. 1C the drive shaft 3 of the motor 2 carries a stopper element 6 which limits a rotation of the drive shaft to 0 - 180°. Corresponding abutments in the housing provide limit stops. One of the limit stops may be provided, e.g., in the upper part of the housing, the other one in the lower part. Other configurations are also possible. The drive shaft further carries the cam 5. The shape of the cam 5 corresponds to a circular cylinder which is cut under an angle, e.g. of 45 degree to its rotational axis. The (cam) surface 51 of the cut comprises an ellipse. The point on the circumference of the ellipse which is the nearest one to the motor 2 corresponds to an apex 55. The cut circular cylinder is coaxially fixed to the drive shaft 3. Accordingly, during a 180 ° turn of the drive shaft 3, a physical contact of the first contact surface 41 of the arc-shaped trigger member 4 and the inclined cut surface 51 of the cam 5 reaches the apex 55 (Fig. 2C, Figs. 5A and 5B illustrate this configuration) and thus, the cam 5 forces the arc-shaped trigger member 4 - against the pressure of the torsion spring 45 - to be inclined towards the motor 2.

According to embodiments, the arc-shaped trigger member may - in addition to the torsion spring 45 - be pulled forward by a trigger pull spring 46. The resulting pivoted position of the arc-shaped trigger member 4 in turn allows the hook-latch 1 to be pushed by the latch torsion spring 15 in the unlocked position. The hook-shaped opening 11 of the latch 1 turns up and the catch 21 of the battery 20, which was held by the latch 1, is released. The release of the battery 20 is facilitated by the buffer 7. The buffer 7 is pushed by a spring 75 towards the battery. Depending on the state of the buffer 7, either compressed or relaxed, expanded, a projection 71 of the buffer 7 moves a magnet 72 either away from (expanded) or over (compressed) a corresponding magnet sensor 81, e.g. a Hall effect sensor, of the sensor unit 8, which comprises a printed circuit board. This allows to electronically detect an actual state of the battery lock, and - if required - to convey by a suitable wireless connection, to, e.g., a web-server. The current state of the battery lock 100 may also be detected by the signal of a magnet sensor 82 in response to the presence (or absence) of a magnet 47 fixed to the arc-shaped trigger member 4. (See Fig. 4).

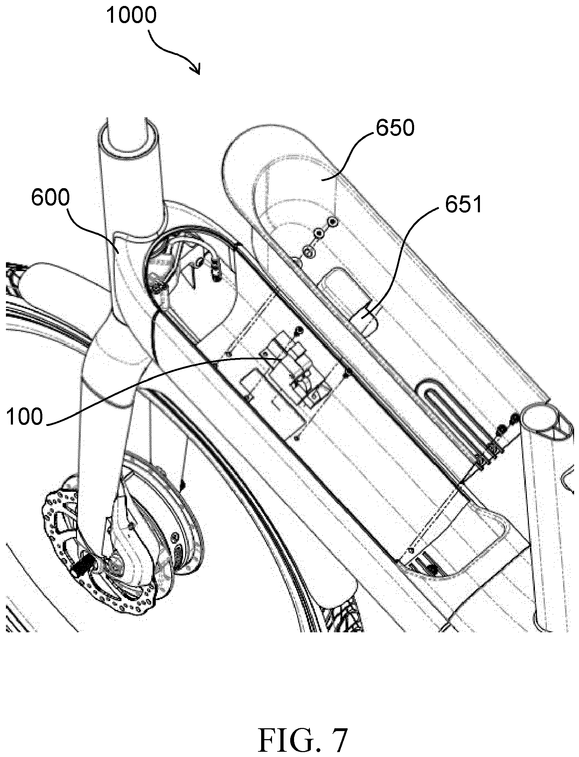

Fig. 2 illustrates the basic states of the battery lock 100 as described, e.g., by independent claims. The battery lock 100 is integrated in a frame of a vehicle which is not illustrated, see also Fig. 7. Fig. 2A is a side view of the "ready to latch" configuration. The battery 20 can be manually pressed into the locked configuration against the pressure of the buffer 7. In other words, the buffer waits for the battery. The cam 5 is in a position (corresponding to 0° rotation of the drive shaft 3) to allow corresponding movement of the arc-shaped trigger member 4, once the latch 1 under the pressure rotates and frees the trigger tooth 44, which so far rests on the circumferential surface 13 of the latch 1. The ready-to-latch configuration of the battery lock 100 is characterized by a distance (free space) between the inclined contact surface 51 of the cam 5 and the first contact surface 41 of the arc-shaped trigger member 4 (see arrow in Fig. 2A). In the closed configuration of the battery lock 100 the hook-shaped mouth 11 of the latch 1 fits with the catch (the tongue 22 thereof) and blocks the battery 20 under the action of corresponding springs (e.g. torsion spring 45, trigger pull spring 46) and against the latch torsion spring 15 (as well as against the pressure of the buffer spring 75), as shown in Fig. 2B. In the locked state the trigger tooth 44 is in contact with the blocking (radial) surface 12 of the latch 1 (see left arrow) and blocks any rotation of the latch 1. The battery 20 at its other end, before, was inserted in a corresponding battery holster (not shown) and lowered towards the lock. Further, the distance between the inclined contact surface 51 of the cam 5 and the first contact surface 41 of the trigger 4 vanished (see right arrow).

Fig. 2C shows that upon a rotation of the cam 5 by 180°, the apex 55 of its inclined surface 51 pressed the first contact surface 41 of the arc shaped trigger member 4 towards the motor 2. There is a point contact between the cam and the trigger (see arrow). As the trigger tooth 44 (with second contact surface 42) slid along the radial contact surface 11 of the latch 1 and moved beyond the circumference of the latch 1, the latch torsion spring 15 pushed the latch 1 into its unlocked position. Under the pressure of the buffer 7 the battery 20 is pushed upwards and the catch 22 of the battery 20 moves out of the hook-shaped mouth 11 of the latch 1. In this configuration the battery 20 rests on the buffer 7 and is ready to be taken out and replaced.

Fig. 3 shows the unlocked (A) and the locked (B) states of the battery lock 100. As shown, even the cam 1 may comprise a magnet 14 for detecting an actual state of the cam with a corresponding magnet sensor (not shown). As illustrated, the battery 20 may comprise a latch receiving release slot 23 with a suitably arranged catch 21, comprising a tongue 21.

Fig. 4 illustrates the position of two different sensors 81 and 82 on the sensor unit 8 and positions of corresponding magnets 72, 47 on the buffer 7 and on the trigger 4 indicating the ready-to-latch state of the battery lock 100. Note the distance between the (first contact surface of the) trigger and the (inclined contact surface 50 of the) cam 5, which is held as the trigger tooth 44 rests on the sliding surface 13 of the latch 1, while the trigger pull spring 46 is in a stretched state.

Figs. 5A and 5B illustrate the interaction of the cam 5 with the arc-shaped trigger member 4 in the locked state of the battery lock 100 according to an embodiment (shown here without the housing). As shown, the locked state corresponds to the relative rotation angle of the drive shaft 3 together with the cam 5 of 0°, when the inclined surface 51 of the cam 5, which corresponds to the cut surface of the cut circular cylinder which resembles the shape of the cam 5, is in a maximal contact with the first contact surface 41 of the arc shaped trigger-member 4. As the arc-shaped trigger member 4 sprung forward, towards the cam, the tooth 44 with its third contact surface 43 slid along the radial contact surface 11 of the latch and hence, blocks the latch against forced withdrawal of the battery.

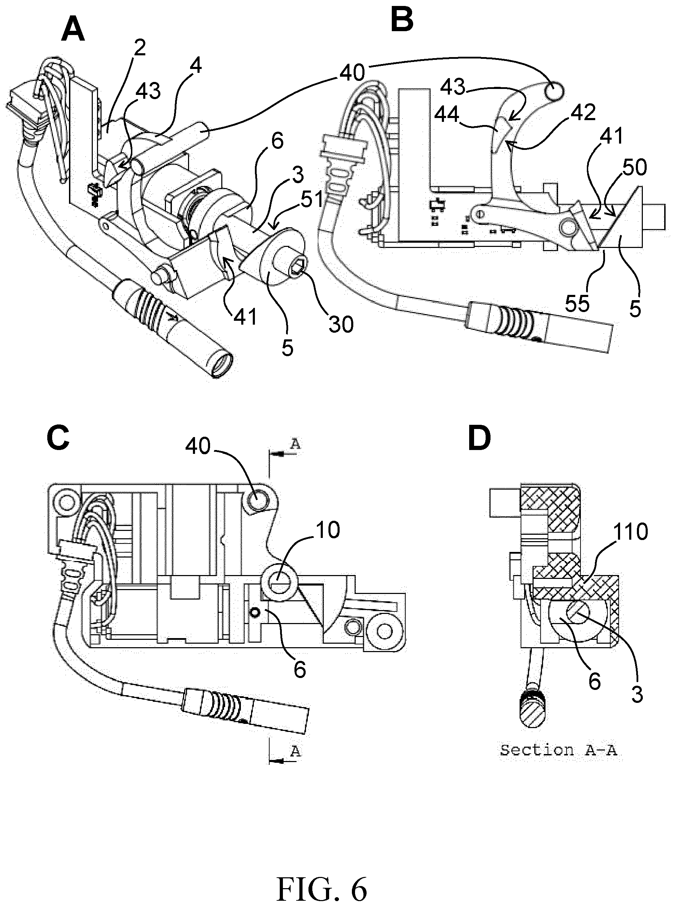

Figs. 6A and 6B illustrate the interaction of the cam 5 with the arc-shaped trigger member 4 in the unlocked state of the battery lock 100, just after the drive shaft 3 of the motor 2 moved the cam 5 into a position rotated by 180° from its initial (closed) position: The apex 55 of the cam is just making a point-contact and thus pushing the first contact surface 41 of the arc-shaped trigger member 4 as far as possible away from the cam 5. According to typical embodiments, immediately after reaching the 180° rotation position, the thus initiated release of the catch 22 from the latch, the sensor unit 8 will trigger a back-rotation towards the initial 0° position. The first contact surface 41 of the arc-shaped latch 4 remains at its position, as the second contact surface 42 on the tooth 44 rests on the circumferential surface 12 of the latch 1. Figs. 6C and 6D show the contact of stopper element 6 in the locked configuration with the corresponding abutment provided by the housing 110, which in its cross-section (A-A) is hatched in Fig. 6D.

Fig. 7 is an expanded view illustrating the mounting of the battery lock 100 inside the down tube of a frame 600, just beneath a trough 650. The latch 1 is arranged to communicate with the catch 22 of a battery 20 through an opening 651 in the trough. The size of the opening is smaller than the projection of the battery lock 100. The battery lock 100 is, e.g., fastened to the down tube of the frame with bolts.

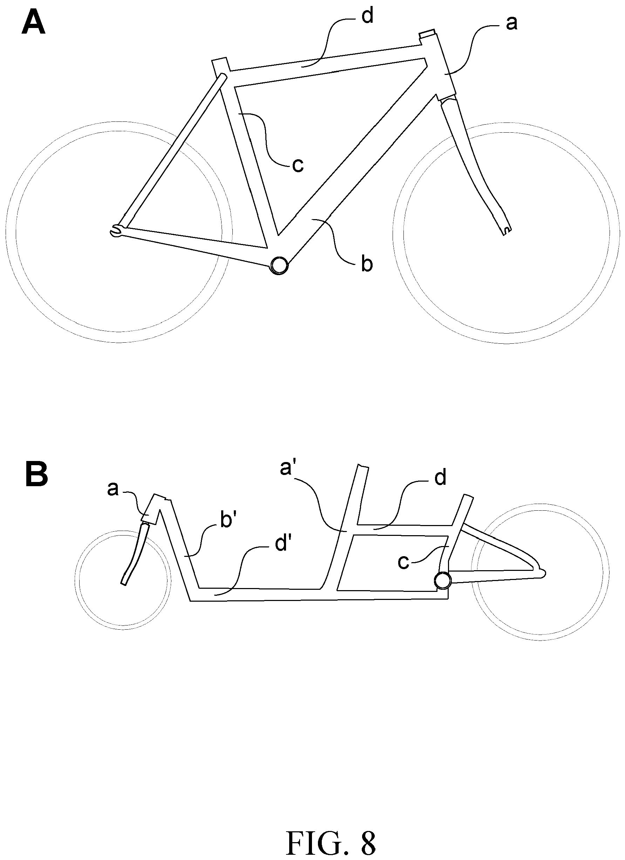

Fig. 8A shows a basic design of a bicycle having a top tube. The battery lock can be mounted inside the down tube *b* but as well inside the seat tube c or even in the top tube *d.* As illustrated by Fig. 8B, another design, e.g. for a cargo bike, provides another down tube b', which could also be used to mount the battery. The "front" tube a' could also be adapted for a tray or trough with the battery lock underneath.

### EXAMPLE

According to an embodiment of the battery lock 100, the cam 5 has a contact surface 50 which is - with respect to a rotational axis of the cam - inclined, and the rotation of the cam 5 around its rotational axis by 0° corresponds to an position of the apex 55 of the cam 5 towards a second end portion 41 of the trigger member, and the rotation by 180° corresponds to a movement of the apex 55 away from the trigger member 4; and a point-contact of the cam with the trigger member (see, e.g. Figs. 2C, and 5) in the unlocked configuration, wherein the apex 55 is in the point contact with the arc-shaped trigger member 4.

According to an embodiment of the battery lock 100, the arc-shaped trigger member 4 comprises three contact surfaces 41, 42, and 43; wherein a first contact surface 41 is disposed at an end of the trigger member away from a pivot axis 40 of the trigger member 4 and adapted to at least the point contact and the full (maximal areal) contact (see, e.g., Figs. 2B, 3B, 6) of the first contact surface 41 with the inclined cut surface 50 of the cam 5.

According to an embodiment of the battery lock the second contact surface 42 and the third contact surface 43 of the trigger member 4 are arranged on the trigger tooth 44 between the remote end (second end portion) of the trigger member 4 and its pivot axis 40, wherein the second contact surface 42 is substantially directed towards a pivot axis 10 of the hook-latch 1 and adapted to the contact with the circumferential (sliding) surface 13 of the hook-latch 1 in the ready-to-lock configuration; and the third contact surface 43 is directed towards the pivot axis 40 of the trigger member 4 and adapted to the contact with the sliding surface 13 of the hook-latch 1 in the locked configuration.

According to an embodiment the trigger member 4 comprises three contact surfaces 41, 42, and 43, wherein a first contact surface 41 is disposed at an end (so called second end portion) of the trigger member 4 which is remote from a pivot axis 40 of said trigger member 4 (i.e. from the first end portion thereof 41) and is adapted to at least a point contact and a maximal areal contact of the first contact surface 41 (of the trigger member 4) with the, e.g. inclined cut surface 50 of a cam 5 which has the shape of an ellipse. The second contact surface 42 and the third contact surface 43 of the trigger member 4 are arranged on the trigger tooth 44 between the remote (second) end (portion) 41 of the trigger member 4 and its pivot axis 40 (i.e. its first end portion), wherein the second contact surface 42 is substantially directed towards a pivot axis 10 of the hook-latch 1 and adapted to the contact with the sliding surface 13 of the hook-latch 1 in the ready-to-lock configuration; and the third contact surface 43 is directed towards the pivot axis 40 of the trigger member 4 and adapted to the contact with the blocking (radial) surface 12 of the hook-latch 1 in the locked configuration. The third contact surface 43 is adapted to block a rotation of the hook-latch 1 and a snapping of the hook-latch 1 from the locked configuration into the unlocked configuration under a permanent pressure of the latch torsion spring 15. The latch torsion spring 15 together with the user provide a convenient storage of energy to operate the lock 100. Typically, for smooth and easy use, the cam 5 after a first rotation by 180 degrees, rotates back into the initial position at 0 degree by an immediate polarity inversion of a driving current directed to the battery lock motor 2 (e.g. a DC driven motor). However, the cam 5 may also be rotated by a stepper motor without the need to switch a polarity of the driving current. That allows establishing the ready-to-lock configuration, which is characterized by the possibility of easily establishing the direct and maximal areal contact of the cam contact surface 50 with the first contact surface 41 (second end portion 41) of the trigger member 4.

According to an embodiment the magnet sensor is selected from a Hall sensor, i.e. the sensor unit PCB comprises one or more Hall sensors. Advantageously, such sensors can be placed on or integrated into the printed circuit board (PCB) of the sensor unit 8. Contemporary PCB-technology allows for safe integration of electronics. The slim shape of the PCB fits easily inside the housing of the lock.

Typically, the battery lock 100 comprises a housing 110 and a main part of the housing 110 fits into the frame 600 or can be integrated with the frame 600, e.g. in a trough or a recess therein. The housing 110 is adapted for joining with the frame 600. Typically, in the locked state of the battery lock 100, a main part of the battery 20 is placed inside a trough 650 - or a cavity 650 in the frame - such as to allow physical interaction of the hook-latch 1 and the buffer 7 with a body and a catch of the battery 20 inside a latch receiving and release slot 23 in the body of the battery 20 through a trough opening 651.

Advantageously, the lock is invisible and not accessible for unauthorized manipulation with the inserted battery.

The three basic states of the battery lock can be characterized as follows.

In the "ready to latch" state, the hook-latch 1 is in the unlocked state wherein its hook-shaped opening 11 is directed towards the opening of the tray or trough beneath which the lock 10 is mounted. The arc-shaped trigger member 4 is in the slipping state, wherein the second contact surface 42 rests on the circumferential contact surface 13 of the hook-latch 1, and the cam 5 is in the locked state, and has no contact whatsoever with any of the contact surfaces of the arc-shaped trigger 4.

In the "locked" state the radial contact surface 11 of the hook-latch 1 rests on the trigger tooth 44, particularly on its upper contact surface 43 which is here named as third contact surface 43 of the arc-shaped trigger member 4. Further, a maximal contact of the first contact surface 41 of the arc-shaped trigger member 4 with the inclined cut surface 55 of the cam 5 is established.

In the "unlocked" state a relative rotation angle of the drive shaft 3 corresponds to a rotation of about 90° or more and the first contact surface 61 of the stopper element 6 is in contact with or close to a contact with the first contact surface of the abutment, and the apex 55 on the outer edge 50 of the plane surface 51 - which is, if measured along the inclined cut surface, the farthest one from the drive shaft 3 and the closest one to the stopper element 6 and to the motor 2 is in a point-contact with the first contact surface 41 of the arc shaped trigger-member 4.

The different elements units of the battery lock 100 can be described as follows.

The lock 100 is encased in a housing 110 which may be fabricated, e.g. by metal injection molding, die casting, plastic injection molding, laser assisted powder sintering etc.. The housing 110 consists of two intercalating halves 111 and 112. The two halves 111 and 112 of the housing 110 provide the pivot bearings for the arc-shaped trigger 4 and for the hook-latch 1, a support for the sensor unit, a recess for the motor 2 and an opening for the power supply cable of the motor 2 as well as stops for the rotation limiter 6, i.e. stopper element 6.

The motor 2 is a direct current motor. Advantageously, the direction of rotation can be changed by simply reversing the polarity of the driving DC current. The motor 2 has a drive shaft 3 which is fastened to the motor. The motor 2 and its drive shaft 3 in a mounted state of the battery lock 100 in the frame 600 of the vehicle 1000 are oriented parallel to the corresponding tube in which the battery lock 10 is fixed. Therefore, the rotation axis of the motor/drive shaft lays within the main plane of the frame 600.

Fastened to the drive shaft 3 is the cam 5. The shape of the cam 5 corresponds to a circular cylinder which is cut under an inclined angle, e.g. under an angle of substantially 45 degree or, within a cut angle of 40 to 60 degree with respect to the central axis of the cylinder. If the angle would be too steep, the lock 100 would be unnecessary long which would contravene a compact design as desired. Furthermore, the stability of the cam 5 might be limited. The cam 5 is fastened coaxially to the drive shaft 3, wherein a position of the apex 55 of its inclined "cut" surface 50 comes nearest to. The cam 5 can be supported in the housing 110 to prevent any bending and longitudinal forces to the motor shaft bearings 31.

The hook-latch 1 is of a basically half-circular shape having a radial recess which is formed as a hook-shaped mouth 11. One side of the recess is rounded. Such rounded circumferential shape alleviates raising of the battery 20 if the latch 1 moves into its unlocked position, i.e. to mouth orients in an orthogonal orientation with respect to the tube (or trough 650) the lock 100 is mounted in/beneath. A pivot axis 10 of the hook-latch 1 is oriented orthogonally with respect to the rotational axis of the motor 2/ the drive shaft 3.

The shape of the arc-shaped trigger member 4 repeats substantially the curvature of the hook-latch 1 and carries a tooth 44. At the end of the arc-shaped latch 4 is a first contact surface 41 for contact with the cam 5, particularly with its inclined cut surface 50. The contact may, depending on the rotational state of the cam 5 and on the corresponding position (pivot angle) of the arc-shaped trigger member 4 be a point contact - where merely the apex 55 of the inclined contact surface 50 touches the first contact surface 50; or a plane contact (areal contact) - where the first contact surface 41 is parallel to the inclined cut surface 50 and laying thereon. The point contact corresponds to the unlocked state, the plane contact corresponds to the locked state of the battery lock 100.

Beside the cam 5 the drive shaft 3 carries a stopper element 6. The stopper element 6 has two contact surfaces which are arranged orthogonally to the drive shaft and adapted for interaction with corresponding abutments inside the housing 110. The stopper 6 together with the abutments ensures restriction of a rotation of the drive shaft 3 and hence, the cam 5 to the range between 0° and 180°.

Further, the housing 110 provides a guiding channel for the buffer 7. The buffer 7 comprises a projection 71 which has at its end a magnet 72. The position of the buffer 7, i.e. its extended or compressed state, is indicated by a position of the buffer magnet 72 above a corresponding magnet sensor (e.g. a Hall sensor) 81 on a printed circuit board (PCB) comprising the sensor unit 8. If the buffer magnet 72 is not near / adjacent to the corresponding sensor 81, the state of the buffer is expanded. The expanded state would be the natural state of the buffer 7, as an elastic element, e.g. a spring, pushes the buffer body out of the housing 110. The strength of the elastic element (spring) is selected to carry the effective weight of the battery 20 held with its one end in a battery holster in the frame 600 of the vehicle 1000. The projection 71 may be shaped as an abutment in order to prevent the buffer body from moving too far out of the housing 110. The different states of the buffer 7, corresponding to different positions of the buffer magnet 72 with respect to the corresponding magnet sensor 81 of the sensor unit 8 indicate whether the lock 100 is in the ready to latch and the unlocked state or in the locked state.

The lock 100 is mounted beneath a trough 650 inside a recess of a tube of the frame 600. The trough 650 is dimensioned to accommodate a main part of the battery 20 and to fit an outer contour thereof. At the bottom of the trough 650 there is an opening 651. The lock 100 is connected with the frame such as to communicate with the battery 20 by its latch 1 through said opening 651.

The sensor unit 8 is configured to detect and to discriminate between the "unlocked state", the "ready to latch" state, and the "locked state" by a position of different magnets with respect to corresponding magnet sensors. Particularly, the positions of a magnet which is fixed in the arc shaped member 4, a magnet which is fixed in the hook-latch 1 and/or in the buffer 7 with respect to corresponding sensors are detected.

As indicated, the pivotable elements arc-shaped trigger member 4 and the hook-latch are pressed/pushed by appropriate springs, e.g. the latch torsion spring 15, the torsion spring 45 of the hook shaped trigger 4 and the optional pull spring 46 thereof.

According to typical embodiments of the battery lock 100 in the locked state a first portion of the body of the battery 20 comprising the catch 22 is held by the latch 1 and a second portion of the body of the battery comprising electrical contacts is held by a connector element, e.g., a plug comprising corresponding contacts in a holster which is fixed to or integrated in the frame or any other positioning feature, or e.g. a pocket in the chassis. Thus, the first portion is adjacent to an end of the battery which is opposite to the connector- portion of the battery.

In addition to the aforementioned use with a battery (pack) for an e-bike or e-scooter, the described embodiments of the lock 100 also have versatile applications for other shared objects, different from the battery 20. The skilled person is aware that necessary adaptations can easily be made without limiting the full functionality of the corresponding objects, which thus, can be made available to the user, e.g., against a rental fee.

The present invention has been explained with reference to various illustrative embodiments and examples. These embodiments and examples are not intended to restrict the scope of the invention, which is defined by the claims and their equivalents. As is apparent to one skilled in the art, the embodiments described herein can be implemented in various ways without departing from the scope of what is invented. Various features, aspects, and functions described in the embodiments can be combined with other embodiments.

### REFERENCE SIGNS

- 1: hook-latch
- 10: pivot axis of hook-latch
- 11: recess, opening of hook-latch, mouth
- 12: blocking surface of hook-latch
- 13: sliding surface of hook-latch
- 14: magnet in hook-latch
- 15: hook-latch torsion spring
- *d*: length of mouth
- /: length of tongue
- *w*: width of mouth
- 100: battery lock
- 110: housing of battery lock
- 111: first part of housing of battery lock
- 112: second part of housing of battery lock
- 1000: electrical vehicle
- 20: battery, battery body
- 21: catch of battery
- 22: tongue of catch
- 23: latch receiving release slot of battery
- 2: motor
- 3: drive shaft of motor, its prolongation
- 30: socket, slot at front end of drive shaft of motor
- 31: motor shaft bearing
- 4: trigger member
- 40: pivot axis of trigger member
- 41: second end portion of trigger member, first contact surface of trigger member
- 42: second contact surface of trigger member
- 43: third surface of trigger member
- 44: tooth on trigger member
- 45: torsion spring of trigger member
- 46: trigger pull spring of trigger member
- 47: magnet in trigger member
- 5: cam
- 50: inclined contact surface of cam
- 51: edge of inclined contact surface of cam
- 55: apex of edge of inclined contact surface of cam
- 6: stopper element, mounted on drive shaft of motor
- 600: frame of electrical vehicle, chassis
- 650: trough, integrated with frame/chassis for receiving battery; recess in frame/chassis
- 651: opening in trough for hook-latch
- 7: buffer member, bumper
- 71: protrusion of buffer
- 72: magnet in protrusion of buffer
- 75: elastic element, e.g. spring
- 8: sensor unit (PCB) with magnet sensors

The present invention has been explained with reference to various illustrative embodiments and examples. These embodiments and examples are not intended to restrict the scope of the invention, which is defined by the claims and their equivalents. As is apparent to one skilled in the art, the embodiments described herein can be implemented in various ways without departing from the scope of what is invented. Various features, aspects, and functions described in the embodiments can be combined with other embodiments.

According to an aspect, the following clauses describe embodiments of the invention:
Clauses:
1. A battery lock (100) for a battery (20) of an electrical vehicle (1000), comprising:
   - a rotatable hook-latch (1) comprising a recess (11) and having a blocking surface (12);
   - a trigger member (4) having a trigger tooth (44);
   - a cam (5);
   - a battery lock motor (2) configured to move the cam (5);
   - trigger pull spring (46) configured to press the trigger member (4) towards the hook-latch (1);
   - a sensor unit (8); and
   - a control unit which is configured to control the battery lock motor (2);
      wherein the battery lock (100) is adapted to a sequence of a ready-to-lock configuration, followed by a locked configuration; and an unlocked configuration,
      wherein in the ready-to-lock configuration the trigger pull spring (46) moves the trigger member (4) towards the hook-latch (1) and a movement of the trigger member (4) is not blocked by the cam (5);
      wherein in the locked configuration a catch (22) of the battery (20) is engaged with the recess (11) of the hook-latch (1), the trigger tooth (44) of the trigger member (4) is in contact with the blocking surface (12) of the hook-latch (1) thereby blocking a rotation of the hook-latch (1);
      wherein in the unlocked configuration the trigger tooth (44) of the trigger member (4) is not in contact with the blocking surface (12) of the hook-latch (1) due to the cam (5), and a movement of the trigger member (4) is blocked by the cam (5); and
      wherein the sensor unit (4) is adapted to provide a sensor signal pattern to a control unit, which is indicative with respect to a current configuration of the battery lock (100).
2. The battery lock (100) according to clause 1, further comprising:
   - a buffer (7) configured to carry an effective weight of the battery (20) and having a pushed-out and a pushed-in state;
      wherein in the ready-to-lock configuration the buffer (7) is in the pushed-out state; and
      wherein in the locked configuration the buffer (7) is in the pushed-in state;
      wherein in the unlocked configuration the buffer (7) is in the pushed-out state.
3. The battery lock (100) according to clause 1 or 2, wherein the motor comprises a drive shaft (3) and a stopper element (6) on the drive shaft (3) is configured to restrict a rotation of the drive shaft (3) relative to a stopper abutment fixed to a housing (110) of the battery lock (100).
4. The battery lock (100) according to any of the preceding clauses, wherein the battery lock (100) is configured to be integrated in a frame (600) of an electrical vehicle (1000).
5. The battery lock (100) according to any of the preceding clauses, wherein the buffer (7) comprises a buffer magnet (72), and the buffer magnet (72) is arranged to allow detection of a state of the buffer (7) by a first sensor (81) of the sensor unit (8).
6. The battery lock (100) according to any of the preceding clauses, wherein the cam (5) is rotatable and wherein the motor (4) is configured to rotate the cam (5), the cam (5) being configured to transform a rotary motion into a linear motion.
7. The battery lock (100) according to any of the preceding clauses, wherein in the ready-to-lock configuration the trigger pull spring (46) moves the trigger tooth (44) towards a sliding surface (13) of the hook-latch (1) configured to guide the trigger tooth (44) to the blocking surface (12) of the hook-latch (1) upon a rotation of the hook-latch (1).
8. The battery lock (100) according to any of the preceding clauses, wherein the trigger member (4) is arc-shaped and rotatable at a first end portion, wherein a second end portion is configured for contacting the cam (5) in the unlocked configuration, in the locked configuration, and during a transfer from the locked configuration to the unlocked configuration.
9. The battery lock (100) according to any of the preceding clauses, wherein the trigger member (4) with the trigger tooth (44) is pivotable relative to a rotational axis (10) of the hook-latch (1) by a movement of the cam (5).
10. The battery lock (100) according to any of clauses 8 or 9, wherein in the ready-to-lock configuration a contact of the trigger tooth (44) with the sliding surface (13) of the hook-latch (1) prevents a contact of the second end portion (41) of the trigger member (4) with the cam (5).
11. The battery lock (100) according to any of preceding clauses, wherein the vehicle control unit is configured to apply a first driving current to the battery lock motor (2) and a second driving current to the battery lock motor (2) having an opposite polarity of the first driving current, depending from a sensor signal pattern of the sensor unit (8).
12. The battery lock (100) according to clause 11, wherein the sensor unit (8) comprises a printed circuit board (PCB) and at least two sensors (81, 82) for detecting a position of at least two elements selected from: the hook-latch (1), the buffer (7), and the trigger member (4) and/or to generate the sensor signal pattern.
13. The battery lock (100) according to any of clauses 3 to 12, wherein a front face of the drive shaft (3) comprises a socket or tab (30) for manually rotating the cam (5).
14. The battery lock (100) according to any of the preceding clauses, wherein the trigger member (4) comprises a magnet (47), wherein a position of the magnet (47) is indicative for a distance between the second end portion (41) of the trigger member (4) and the cam (5), wherein a sensor (82) of the sensor unit (8) is configured to sense the position of the magnet (47).
15. The battery lock (100) according to any of the preceding clauses, wherein the hook-latch (1) comprises a magnet (14), wherein a position of the magnet (14) is indicative for a rotation position of the hook-latch (1) and wherein a sensor of the sensor unit (8) is configured to measure the position of the magnet (14).
16. An electrical vehicle energized by a battery (20), having a frame (600), and the battery lock (100) according to any of the preceding clauses, wherein the battery lock (100) is adapted to be fixed inside a housing or trough (650), wherein the housing or trough (650) is integrated in the frame (600).
17. The electrical vehicle according to clause 16, wherein the frame (600) comprises a cavity (650) configured to receive at least a portion of the battery (20), wherein the portion of the housing (110) is placed in or beneath the cavity (650).
18. The electrical vehicle according to clause 17, wherein the frame (600) comprises a holster defining a first fixing point of the battery (20), wherein the battery lock (100) defines a second fixing point of the battery (20) in the cavity.
19. A method for securing a battery (20) with a battery lock (100) according to any of clauses 1-15, the method comprising:
   - providing a vehicle (1000) comprising the battery lock (100) integrated in a frame (600) of the vehicle (1000), wherein the battery lock (100) is in a ready-to-lock state;
   - inserting one end of the battery (20) into a holster integrated in the frame (600) such as to provide an electrical connection between the contacts of the battery (20) with corresponding contacts of the holster;
   - pressing the body of the battery (20) against a pressure generated by a buffer spring (75) until the hook-latch (1) of the battery lock (100) receives the catch (22) of the battery (20) and the latch (1) slides into a locked configuration, the locked configuration being reached by a contact of a blocking surface (12) of the hook-latch (1) with a trigger tooth (44) of the trigger member (4) and a maximal areal contact of the second end (41) of the trigger member (4) with the cam (5).
20. A method for unlocking a battery (20) of an electric vehicle (1000), the method comprising:
   - providing a vehicle (1000) comprising a wireless interface (1100), the battery lock (100) according to any of clauses 1 through 15, and a battery (20);
   - receiving, by the wireless interface (1100) of the vehicle (1000), an unlocking signal; and
   - applying, by the control unit, a driving current to the battery lock motor (2) and transitioning the battery lock (100) into the unlocked configuration.
21. The method of clause 20, wherein the vehicle is provided with a frame having a cavity, wherein the battery (20) is at least partially placed inside the cavity, wherein the method further comprises:
   - pushing, by a buffer (7) and a buffer spring (75) of the battery lock (100), the battery (20) at least partially out of the cavity (650) after applying a driving current to the battery lock motor (2).

## Claims

1. A battery lock (100) for a battery (20) of an electrical vehicle (1000), comprising:
- a rotatable hook-latch (1) comprising a recess (11) and having a blocking surface (12);
- a trigger member (4) having a trigger tooth (44);
- a cam (5);
- a battery lock motor (2) configured to move the cam (5);
- a trigger pull spring (46) configured to press the trigger member (4) towards the hook-latch (1);
- a sensor unit (8); and
- a control unit which is configured to control the battery lock motor (2);
wherein the battery lock (100) is adapted to a sequence of a ready-to-lock configuration, followed by a locked configuration; and an unlocked configuration;
wherein in the ready-to-lock configuration the trigger pull spring (46) moves the trigger member (4) towards the hook-latch (1) and a movement of the trigger member (4) is not blocked by the cam (5);
wherein in the locked configuration a catch (22) of the battery (20) is engaged with the recess (11) of the hook-latch (1), the trigger tooth (44) of the trigger member (4) is in contact with the blocking surface (12) of the hook-latch (1) thereby blocking a rotation of the hook-latch (1);
wherein in the unlocked configuration the trigger tooth (44) of the trigger member (4) is not in contact with the blocking surface (12) of the hook-latch (1) due to the cam (5), and a movement of the trigger member (4) is blocked by the cam (5); and
wherein the sensor unit (8) is adapted to provide a sensor signal pattern to a control unit, which is indicative with respect to a current configuration of the battery lock (100);
wherein, optionally,
the battery lock (100) further comprises:
- a buffer (7) configured to carry an effective weight of the battery (20) and having a pushed-out and a pushed-in state;
wherein in the ready-to-lock configuration the buffer (7) is in the pushed-out state; and
wherein in the locked configuration the buffer (7) is in the pushed-in state;
wherein in the unlocked configuration the buffer (7) is in the pushed-out state.

2. The battery lock (100) according to claim 1, wherein the motor comprises a drive shaft (3) and a stopper element (6) on the drive shaft (3) is configured to restrict a rotation of the drive shaft (3) relative to a stopper abutment fixed to a housing (110) of the battery lock (100);
wherein, optionally,
the battery lock (100) is configured to be integrated in a frame (600) of an electrical vehicle (1000).

3. The battery lock (100) according to any of the preceding claims, wherein the buffer (7) comprises a buffer magnet (72), and the buffer magnet (72) is arranged to allow detection of a state of the buffer (7) by a first sensor (81) of the sensor unit (8).

4. The battery lock (100) according to any of the preceding claims, wherein the cam (5) is rotatable and wherein the motor (4) is configured to rotate the cam (5), the cam (5) being configured to transform a rotary motion into a linear motion.

5. The battery lock (100) according to any of the preceding claims, wherein in the ready-to-lock configuration the trigger pull spring (46) moves the trigger tooth (44) towards a sliding surface (13) of the hook-latch (1) configured to guide the trigger tooth (44) to the blocking surface (12) of the hook-latch (1) upon a rotation of the hook-latch (1).

6. The battery lock (100) according to any of the preceding claims, wherein the trigger member (4) is arc-shaped and rotatable at a first end portion, wherein a second end portion is configured for contacting the cam (5) in the unlocked configuration, in the locked configuration, and during a transfer from the locked configuration to the unlocked configuration;
wherein, optionally,
the trigger member (4) with the trigger tooth (44) is pivotable relative to a rotational axis (10) of the hook-latch (1) by a movement of the cam (5); and
wherein, optionally,
in the ready-to-lock configuration a contact of the trigger tooth (44) with the sliding surface (13) of the hook-latch (1) prevents a contact of the second end portion (41) of the trigger member (4) with the cam (5).

7. The battery lock (100) according to any of preceding claims, wherein the vehicle control unit is configured to apply a first driving current to the battery lock motor (2) and a second driving current to the battery lock motor (2) having an opposite polarity of the first driving current, depending from a sensor signal pattern of the sensor unit (8).

8. The battery lock (100) according to claim 7, wherein the sensor unit (8) comprises a printed circuit board (PCB) and at least two sensors (81, 82) for detecting a position of at least two elements selected from: the hook-latch (1), the buffer (7), and the trigger member (4) and/or to generate the sensor signal pattern.

9. The battery lock (100) according to any of the preceding claims, wherein the trigger member (4) comprises a magnet (47), wherein a position of the magnet (47) is indicative for a distance between the second end portion (41) of the trigger member (4) and the cam (5), wherein a sensor (82) of the sensor unit (8) is configured to sense the position of the magnet (47).

10. The battery lock (100) according to any of the preceding claims, wherein the hook-latch (1) comprises a magnet (14), wherein a position of the magnet (14) is indicative for a rotation position of the hook-latch (1) and wherein a sensor of the sensor unit (8) is configured to measure the position of the magnet (14).

11. An electrical vehicle energized by a battery (20), having a frame (600), and the battery lock (100) according to any of the preceding claims, wherein the battery lock (100) is adapted to be fixed inside a housing (110), wherein the housing (110) is integrated in the frame (600).

12. The electrical vehicle according to claim 11, wherein the frame (600) comprises a cavity (650) configured to receive at least a portion of the battery (20), wherein the portion of the housing (110) is placed in or beneath the cavity (650), and
wherein, optionally,
the frame (600) comprises a holster defining a first fixing point of the battery (20), wherein the battery lock (100) defines a second fixing point of the battery (20) in the cavity.

13. A method for securing a battery (20) with a battery lock (100) according to any of claims 1-10, the method comprising:
- providing a vehicle (1000) comprising the battery lock (100) integrated in a frame (600) of the vehicle (1000), wherein the battery lock (100) is in a ready-to-lock state;
- inserting one end of the battery (20) into a holster integrated in the frame (600) such as to provide an electrical connection between the contacts of the battery (20) with corresponding contacts of the holster;
- pressing the body of the battery (20) against a pressure generated by a buffer spring (75) until the hook-latch (1) of the battery lock (100) receives the catch (22) of the battery (20) and the latch (1) slides into a locked configuration, the locked configuration being reached by a contact of a blocking surface (12) of the hook-latch (1) with a trigger tooth (44) of the trigger member (4) and a maximal areal contact of the second end (41) of the trigger member (4) with the cam (5).

14. A method for unlocking a battery (20) of an electric vehicle (1000), the method comprising:
- providing a vehicle (1000) comprising a wireless interface (1100), the battery lock (100) according to any of claims 1 through 10, and a battery (20);
- receiving, by the wireless interface (1100) of the vehicle (1000), an unlocking signal; and
- applying, by the control unit, a driving current to the battery lock motor (2) and transitioning the battery lock (100) into the unlocked configuration.

15. The method of claim 14, wherein the vehicle (1000) is provided with a frame (600) having a cavity (650), wherein the battery (20) is at least partially placed inside the cavity (650), wherein the method further comprises:
- pushing, by a buffer (7) and a buffer spring (75) of the battery lock (100), the battery (20) at least partially out of the cavity (650) after applying a driving current to the battery lock motor (2).
